# EUROPÄISCHE PATENTSCHRIFT

(11) **EP 3 599 931 B1**
(45) Veröffentlichungstag und Bekanntmachung des Hinweises auf die Patenterteilung: **13.10.2021**
(21) Anmeldenummer: 18722882.0
(22) Anmeldetag: 27.03.2018
(51) Int. Cl.: A47G 19/22, A47J 31/20, B62J 11/00, B65D 23/10, A45F 3/16

(54) **GETRÄNKEBEHÄLTER**
BEVERAGE CONTAINER
RÉCIPIENT À BOISSON

(30) Priorität: 27.03.2017 DE 102017106538
(43) Veröffentlichungstag der Anmeldung: 05.02.2020
(73) Patentinhaber: Avakhti, Gazwan, 34266 Niestetal (DE)
(72) Erfinder: Avakhti, Gazwan, 34266 Niestetal (DE)
(74) Vertreter: Sprenger, Gerrit Lars Eike
(86) Internationale Anmeldenummer: PCT/DE2018/100282
(87) Internationale Veröffentlichungsnummer: WO 2018/177477

(56) Entgegenhaltungen:
- EP-A1- 1 541 484
- EP-A2- 0 110 057
- WO-A1-2004/098948
- WO-A1-2016/081387
- WO-A1-2016/163924
- CN-A- 106 031 548
- CN-U- 201 634 016
- CN-U- 202 128 234
- CN-U- 202 552 675
- CN-U- 203 152 880
- CN-U- 205 658 725
- US-A1- 2008 128 429
- US-A1- 2016 236 819
- US-A1- 2017 225 833

## Beschreibung

Die Erfindung betrifft einen Trinkbehälter nach dem Oberbegriff des Patentanspruchs 1. Derartige Trinkbehälter werden oftmals bei Freizeitaktivitäten und Sportaktivitäten benutzt, um ein Getränk möglichst schnell griffbereit zu haben. Dazu ist bei vielen Trinkbehältern ein Karabiner vorgesehen, mit welchem der Trinkbehälter in einfacher Weise an verschiedensten Gegenständen, wie beispielsweise einem Rucksack, einem Schlüsselbund oder auch an einem Kleidungsstück befestigt werden kann. Derartige Trinkbehälter mit entsprechenden Karabinern sind beispielsweise in der WO 2016/163924 A1 und in der WO 2016/081387 A1 beschrieben. Nachteilig bei den bekannten Trinkbehältern mit einem Karabiner zum Befestigen des Trinkbehälters an einem anderen Gegenstand ist allerdings, dass der Karabiner immer aktiv betätigt werden muss, um den Trinkbehälter an dem entsprechenden Gegenstand zu befestigen beziehungsweise von dem entsprechenden Gegenstand zu lösen.

Ferner werden heutzutage von vielen Menschen, insbesondere in Städten, sportliche Aktivitäten nicht mehr in der Natur durchgeführt, sondern zum großen Teil - auch wegen den in den Städten oftmals nicht in ausreichendem Maße vorhandenen Naturflächen - in Fitnessstudios. In derartigen Fitnessstudios stehen oftmals stationäre Übungsgeräte zur Verfügung, mit welchen der Benutzer sportliche Aktivitäten, wie beispielsweise Laufen, Radfahren und dergleichen mehr durchführen kann, ohne sich allerdings von der Stelle bewegen zu müssen, da dazu Laufbänder, Ergometer, Crosstrainer und dergleichen mehr zur Verfügung stehen. Weiterhin sind in derartigen Fitnessstudios auch andere Geräte vorhanden, mit denen klassische Kraftübungen wie beispielsweise Bankdrücken, Gewichtheben und dergleichen mehr durchgeführt werden können. Das grundsätzliche Problem dabei ist, dass auch in den Fitnessstudios der Benutzer der Sportgeräte dafür sorgen muss, dass seine Flüssigkeits- und Mineralienzufuhr während der sportlichen Betätigung ausreichend ist, um die Verletzungsgefahr des Muskel- und Bandapparates zu minimieren. Zwar können die bekannten Trinkbehälter auch in Fitnessstudios benutzt werden. Allerdings weisen die entsprechenden Sportgeräte in den Fitnessstudios in der Regel keine entsprechenden Elemente auf, an denen ein Trinkbehältnis mit einem Karabiner oder dergleichen befestigt werden kann.

Aus der CN 202 128 234 U ist ein Trinkbehälter nach dem Oberbegriff des Patentanspruchs 1 bekannt.

Ferner ist es in Fitnessstudios üblich, dass die jeweiligen Benutzer eine Zugangsberechtigung bei Verlangen vorzeigen müssen. Derartige Zugangsberechtigungen werden von dem Betreiber des Fitnessstudios in der Regel als Chipkarten oder dergleichen ausgegeben. Dabei ist es üblich, diese Chipkarten zur Zugangsberechtigung am Körper, beispielsweise über ein entsprechendes Band, an dem die Chipkarte befestigbar ist und welches man sich beispielsweise um den Hals hängen kann, zu tragen. Allerdings ist ein derartiges um den Hals gehängten Band samt Karte bei der sportlichen Aktivität oftmals hinderlich. Zudem werden derartige Karten heutzutage oftmals auch in Form von Chipkarten ausgegeben, mit welchen andere Dienstleistungen wie beispielsweise in dem Fitnessstudio angebotene Getränke und Mahlzeiten, bezahlt werden können, wenn sie zuvor entsprechend aufgeladen wurden. Gegebenenfalls werden aber auch die entsprechenden Dienstleistungen, Getränke und Mahlzeiten darauf gespeichert, um diese dann beim Verlassen des Fitnessstudios zu bezahlen. Es ist daher zum einen die Aufgabe der Erfindung, einen Trinkbehälter nach dem Oberbegriff des Patentanspruchs 1 derartig weiterzuentwickeln, dass dieser an entsprechenden Sportgeräten, insbesondere in Fitnessstudios, in einfacher Weise an diesen Sportgeräten befestigt und auch davon wieder gelöst werden kann, wobei auch weitere ferromagnetische Gegenstände an dem Trinkbehälter befestigt werden können. Zum anderen ist es eine weitere Aufgabe der Erfindung, ein Trinkbehältnis nach Anspruch 1 dahingehend weiterzubilden, dass sich der Benutzer des Trinkbehälters in einem Fitnessstudio oder dergleichen in einfacher Weise ausweisen kann, ohne dabei durch entsprechende Nachweisdokumente während der sportlichen Betätigung behindert zu werden.

Gelöst wird diese Aufgabe durch einen Trinkbehälter mit allen Merkmalen des Patentanspruchs 1. Vorteilhafte Ausgestaltungen der Erfindung finden sich in den Unteransprüchen 2 bis 7.

Der erfindungsgemäße Trinkbehälter weist dabei zum einen ein Behältergehäuse mit einem Innenraum und einer Öffnung und zum anderen eine Halteeinrichtung auf. Der erfindungsgemäße Trinkbehälter weist auch auf, dass die Halteeinrichtung wenigstens einen an dem Behältergehäuse angeordneten Haltemagneten aufweist. Durch diese Ausgestaltung der Erfindung ist in einfacher Weise erreicht, dass er mittels des an dem Behältergehäuse angeordneten Haltemagneten in einfacher Weise an ferromagnetischen Materialien eines Sport- oder Fitnessgerätes angebracht werden kann. Zum Anbringen des Trinkbehälters an dem jeweiligen Gerät ist es dabei nicht notwendig, eine aktive Maßnahme durchzuführen, wie dies bei den aus dem Stand der Technik bekannten Karabinern durch deren Öffnen und Schließen der Fall ist. Auch beim Lösen des erfindungsgemäßen Trinkbehälters von einem derartigen Gerät ist keine aktive Maßnahme notwendig, um den Trinkbehälter von dem jeweiligen Gerät zu lösen. Es ist jeweils nur notwendig, dass der erfindungsgemäße Trinkbehälter von dem jeweiligen Benutzer gegriffen wird und an die ferromagnetischen Bereiche eines jeweiligen Gerätes gehalten wird, beziehungsweise in analoger Weise wieder davon gelöst wird. Dabei ist nur zu berücksichtigen, dass der Haltemagnet entsprechend stark ausgebildet ist, sodass er den Trinkbehälter samt der im Innenraum des Behältergehäuses befindlichen Flüssigkeit und gegebenenfalls weiterer an dem Trinkbehälter anzuordnender Elemente trägt, ohne von dem jeweiligen Gerät abzufallen. Eine derartige Anpassung ist aber in einfacher Weise möglich, indem man bei der Entwicklung das Volumen des Innenraums und das Gewicht der möglicherweise zusätzlich an dem Trinkbehälter anzuordnenden Elemente berücksichtigt.

Ferner weist das Behältergehäuse des erfindungsgemäßen Trinkbehälters in Bezug auf eine Mittellängsachse des Behältergehäuses gegenüberliegend dem wenigstens einen Haltemagneten an oder in dem Behältergehäuse wenigstens einen weiteren Magneten auf. Durch diese Maßnahme ist es in einfacher Weise ermöglicht, an dem erfindungsgemäßen Trinkbehälter weitere ferromagnetische Materialien zur sicheren Aufbewahrung anzuordnen. Dies können beispielsweise Schlüssel oder dergleichen sein, die dadurch in einfacher Weise an dem Trinkbehälter angeordnet werden können und dem jeweiligen Benutzer jederzeit zur Verfügung stehen. Auch hierbei ist von besonderem Vorteil, dass zur Anordnung des jeweiligen ferromagnetischen Elementes an dem Trinkbehälter keine aktive Maßnahme durchgeführt werden muss. Das ferromagnetische Element, beispielsweise der Schlüssel, braucht nur vor den entsprechenden Magneten gehalten zu werden und wird von diesem sicher angezogen und festgehalten. Auch hierbei ist natürlich zu beachten, dass der wenigstens eine Magnet eine entsprechend ausreichende Haltekraft für derartige ferromagnetische Elemente aufweist. Diese Anpassung der Haltekraft liegt aber im Ermessen des Fachmanns, sodass dieser diese Magnete entsprechend dimensionieren wird.

Da in der Regel heutzutage viele Menschen ein Mobiltelefon in Form eines Smartphones besitzen oder auch andere tragbare elektronische Geräte, wie beispielsweise Tabletcomputer, bieten sich derartige weitere Magneten geradezu dazu an, dass an dem erfindungsgemäßen Trinkbehälter diese Geräte in einfacher Weise angeordnet werden können und durch den Magneten sicher gehalten sind, wenn derartige Geräte mit einem entsprechend ferromagnetischen Element ausgestattet sind. Ein derartiges ferromagnetisches Element kann beispielsweise eine Abdeckplatte für einen Akkumulator eines derartigen elektronischen Elementes sein. Allerdings ist es auch möglich, dass elektronische Elemente, die ein derartiges ferromagnetisches Element nicht aufweisen, mit einem entsprechend ferromagnetischen Element zusätzlich versehen werden. Dies kann beispielsweise eine Metallscheibe sein, die in eine Hülle für das elektronische Gerät, insbesondere für das Smartphone eingeführt werden kann, sodass das Display des elektronischen Gerätes immer noch sichtbar und bedienbar ist, dieses aber durch den Magneten und das ferromagnetische Element sicher an dem erfindungsgemäßen Trinkbehälter gehalten ist.

Nach einer ersten vorteilhaften Ausgestaltung der Erfindung zeichnet sich der erfindungsgemäße Trinkbehälter dadurch aus, dass an dem Behältergehäuse eine Halterung für eine Chipkarte angeordnet ist. Durch diese Maßnahme ist es in einfacher Weise möglich, dass der Benutzer die Chipkarte nicht am Körper tragen muss, was insbesondere bei einer sportlichen Betätigung in einem Fitnessstudio hinderlich sein kann, sondern diese Chipkarte oder dergleichen in der Halterung ablegen kann und diese doch jederzeit an dem Sport- beziehungsweise Fitnessgerät vorweisen kann, um gegebenenfalls seine Berechtigung nachweisen zu können. Außerdem können mit einer derartigen Chipkarte in einfacher Weise weitere Dienstleistungen eines Fitnessstudios bezahlt oder zum späteren Bezahlen darauf gespeichert werden. Da heutzutage Chipkarten oftmals berührungslos funktionieren, können damit in einfacher Weise Dienstleistungen bezahlt oder gespeichert werden, indem einfach der Trinkbehälter mit der Chipkarte an eine entsprechende Bezahl- oder Speichervorrichtung gehalten wird. Das Bezahlen kann dabei bargeldlos über auf der Chipkarte vorhandenes und zuvor aufgeladenes Guthaben an einem entsprechendem Terminal oder auch entsprechendem Personal erfolgen. Natürlich ist auch ein Bezahlen mittels Bargeld oder weitere bargeldloser Bezahlmethoden möglich.

Durch die Erfindung ist damit in einfacher Weise ermöglicht, dass der Trinkbehälter dem Benutzer des Fitnessstudios beziehungsweise der darin enthaltenen Fitness- und Sportgeräte immer an dem gerade benutzten Sportgerät zur Verfügung steht, da der erfindungsgemäße Trinkbehälter in einfacher Weise mit dem Haltemagneten an den ferromagnetischen Materialien des Gerätes befestigt werden kann. Zudem wird durch die Erfindung erreicht, dass der Trinkbehälter sicher gelagert ist, sodass dieser nicht auf dem Boden oder sonst wo abgestellt werden muss, wobei er für die Benutzer des Fitnessstudios eine Gefahrenquelle darstellen würde. Dies könnte unter Umständen zu Verletzungen führen, sodass über einen gewissen Zeitraum keine sportliche Betätigung durchgeführt werden kann, da diese Verletzung erst auskuriert werden müsste.

Der Trinkbehälter weist dabei einen Behälterboden und einen Behälterrand beziehungsweise Behältermantel auf und ist dabei vorzugsweise zylindrisch oder leicht kegelstumpfförmig ausgebildet. Der Behälterrand beziehungsweise Behältermantel ist dabei im Wesentlichen durch den Mantel des durch den Trinkbehälter ausgebildeten Zylinders beziehungsweise Kegelstumpfes gebildet ist. Sowohl der Haltemagneten aufweist als auch Halterung sind dabei an dem Behälterrand beziehungsweise dem Behältermantel angeordnet.

Um dabei die Bedienbarkeit eines derartig an dem Trinkbehälter angeordneten elektronischen Elementes zu gewährleisten, hat es sich als vorteilhaft erwiesen, dass der wenigstens eine weitere Magnet gegenüberliegend dem Haltemagneten an oder in dem Behältergehäuse angeordnet ist. Somit ist das elektronische Gerät, welches an dem weiteren Magnet anordenbar ist, in einfacher weise weiter bedienbar, wenn der erfindungsgemäße Trinkbehälter mit seinem Haltemagneten an einem entsprechenden Sport- oder Fitnessgerät angeordnet ist, da das Display des Gerätes, wie auch der weitere Magnet, an dem das elektronische Gerät angeordnet ist, von dem Sport- beziehungsweise Fitnessgerät weg weist.

Dabei ist es besonders vorteilhaft, wenn das Behältergehäuse eine im Wesentlichen rotationssymmetrische Grundform bezüglich seiner Mittellängsachse aufweist, wobei im Bereich des wenigstens einen weiteren Magneten das Behältergehäuse eine planare Fläche aufweist, welche sich im Wesentlichen über die gesamte Längserstreckung des Behältergehäuses erstreckt. Durch diese Ausgestaltung der Erfindung ist es ermöglicht, entsprechende elektronische Geräte wie Smartphones oder kleine Tablet Computer an dem Trinkbehälter anzuordnen, ohne dass diese wesentlich über das Behältergehäuse des Trinkbehälters hinaus abstehen und somit dort sicher gehalten sind. Hierdurch ist nämlich die Gefahr minimiert, dass derartig an dem Trinkbehälter angeordnete Geräte unbeabsichtigt von dem Trinkbehälter wieder gelöst werden und dabei gegebenenfalls zu Boden fallen und beschädigt werden.

Nach einem weiteren Gedanken der Erfindung hat es sich zudem als vorteilhaft erwiesen, dass das Behältergehäuse eine der Öffnung gegenüberliegende Unterseite aufweist, die vorzugsweise mit einem Gewinde, insbesondere einem Innengewinde versehen ist. Mittels eines derartigen Gewindes, kann an der Unterseite des Trinkbehälters nämlich noch ein weiterer Behälter angeordnet werden, wenn dieser ein entsprechendes Gegengewinde aufweist. Dies ist insbesondere vorteilhaft, um weitere Wertgegenstände oder auch Geld aufzubewahren. Ferner kann die Unterseite, die in der Regel eben ausgebildet ist, dazu genutzt werden, den erfindungsgemäßen Trinkbehälter auf einer ebenen Fläche, wie beispielsweise einem Tisch, einer Theke oder dergleichen abzustellen.

Weiterhin hat es sich als vorteilhaft erwiesen, dass die Öffnung des Behältergehäuses mittels eines lösbar an dem Behältergehäuse angeordneten Deckels verschließbar, vorzugsweise flüssigkeitsdicht verschließbar ist. Hierdurch ist in einfacher Weise gewährleistet, dass der Trinkbehälter verschlossen werden kann, wenn sich in seinem Innenraum ein Getränk beziehungsweise eine Flüssigkeit befindet, sodass dieses während des Gebrauchs des Trinkbehälters nicht verschüttet werden kann.

Damit dieser Deckel nicht jedes Mal von dem Trinkbehälter entfernt werden muss, wenn der Benutzer etwas trinken möchte, hat es sich als vorteilhaft erwiesen, dass der Deckel eine Trinköffnung aufweist, welche vorzugsweise mittels einer Verschlussvorrichtung verschließbar ist. Hierdurch ist es in einfacher Weise möglich, die Trinköffnung zu öffnen und aus dem Trinkbehälter zu trinken, ohne den Deckel von dem Trinkbehälter abnehmen zu müssen. Vorteilhafterweise ist dabei die Verschlusseinrichtung entweder lösbar oder unverlierbar an dem Deckel angeordnet. Dabei wird in der Regel die unverlierbare Anordnung präferiert sein, damit man die Verschlusseinrichtung nicht verliert und die Trinköffnung des Deckels in einfacher Weise wieder verschlossen werden kann, ohne nach der Verschlusseinrichtung suchen zu müssen.

Dabei ist es natürlich am günstigsten, wenn die Trinköffnung mittels der Verschlusseinrichtung flüssigkeitsdicht verschließbar ist. Weiterhin hat es sich dabei als vorteilhaft erwiesen, wenn diese Verschlusseinrichtung ein Henkelelement aufweist, mit welchem der gesamte Trinkbehälter an einem Haken oder Karabinerelement oder dergleichen aufgehängt werden kann.

Da es bei sportlichen Aktivitäten oftmals sinnvoll ist, Flüssigkeiten mit entsprechenden Mineralien oder dergleichen aus festen Bestandteilen anzureichern, werden derartige Bestandteile oftmals in entsprechende Trinkbehälter mit der Flüssigkeit mit eingebracht. Damit diese festen Bestandteile beim Trinken nicht zu sich genommen werden, hat es sich als vorteilhaft erwiesen, dass in dem Innenraum des Behältergehäuses ein Sieb anordenbar ist, welches vorzugsweise an dem Deckel lösbar anordenbar ist und besonders bevorzugt durch den Deckel und die Öffnung des Behältergehäuses fixierbar ist, wenn das Behältergehäuse mittels des Deckels verschlossen ist. Dabei hat es sich als vorteilhaft erwiesen, dass der Deckel ein entsprechendes Innengewinde aufweist, welches mit einem Außengewinde des Behältergehäuses im Bereich dessen Öffnung entsprechend korrespondiert, wobei die entsprechenden Gewinde derart ausgelegt sind, dass der Innenraum des Behältergehäuses flüssigkeitsdicht gegenüber der Umwelt abdichtbar ist.

Nach einem weiteren Gedanken der Erfindung hat es sich als vorteilhaft erwiesen, dass die Halterung für eine Chipkarte oder dergleichen in Form eines Einsteck- oder Einschiebefachs beziehungsweise in Form einer Einklemmeinrichtung ausgebildet ist und dazu vorzugsweise zwei Laschenelemente aufweist. Hierdurch ist es in einfacher Weise ermöglicht, eine Chipkarte oder eine Zugangsberechtigung oder dergleichen an dem erfindungsgemäßen Trinkbehälter beziehungsweise an dessen Behältergehäuse anzuordnen. Dabei kann es vorgesehen sein, dass zwischen diesen beiden Laschenelementen eine transparente Folie angeordnet ist, damit die darin angeordnete Chipkarte beziehungsweise Zugangsberechtigung oder dergleichen vor einer äußeren Verschmutzung geschützt ist. Besonders vorteilhaft ist es, wenn dabei die Halterung in Form eines Einsteck- oder Einschiebefachs nur von einer Seite offen ist, sodass einem Durchschieben der Chipkarte oder dergleichen wirkungsvoll vermieden ist und diese auf der dem Einschub gegenüberliegende Seit nicht wieder herausfällt.

Weitere Ziele, Vorteile, Merkmale und Anwendungsmöglichkeiten der vorliegenden Erfindung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1:: ein Ausführungsbeispiel eines erfindungsgemäßen Trinkbehälters in einer perspektivischen Ansicht,
- Figur 2:: der Trinkbehälter der Figur 1 in einer ersten Seitenansicht,
- Figur 3:: der Trinkbehälter der Figur 1 in einer zweiten Seitenansicht,
- Figur 4:: der Trinkbehälter der Figur 1 in einer Explosionsdarstellung,
- Figur 5:: eine perspektivische Darstellung des Behältergehäuses des Trinkbehälters der Figur 1,
- Figur 6:: eine perspektivische Darstellung des Siebes des Trinkbehälters der Figur 1 und
- Figur 7:: eine perspektivische Darstellung des Deckels des Trinkbehälters der Figur 1.

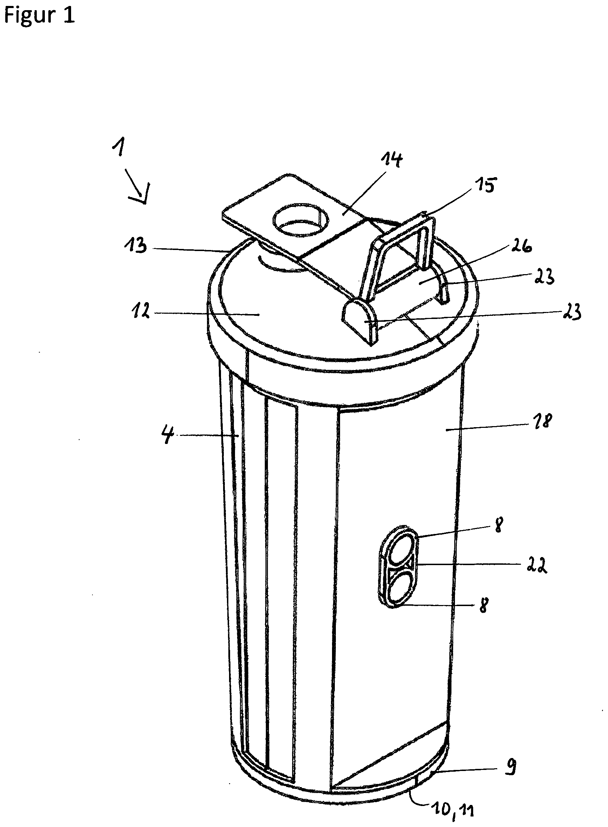

Die Figur 1 zeigt ein Ausführungsbeispiel eines erfindungsgemäßen Trinkbehälters 1 in einer perspektivischen Darstellung. In dieser Darstellung sind bereits drei wesentliche Elemente des erfindungsgemäßen Trinkbehälters 1 erkennbar. Diese sind ein Behältergehäuse 4, ein Deckel 12 und eine Verschlusseinrichtung 14. Das Behältergehäuse 4 weist dabei eine in dieser Darstellung nicht sichtbare Öffnung 3 auf, welche in der Darstellung gemäß Figur 1 mittels eines Deckels 12 verschlossen ist. In dem in Figur 1 nicht sichtbaren Innenraum 2 des Behältergehäuses kann somit eine Flüssigkeit aufgenommen werden, wobei das Behältergehäuse 4 mittels des Deckels 12 flüssigkeitsdicht verschließbar ist. Damit trotzdem, ohne den Deckel 12 von dem Behältergehäuse 4 des Trinkbehälters 1 abnehmen zu müssen, getrunken werden kann, ist in dem Deckel 12 eine Trinköffnung 13 vorgesehen, die mittels einer Verschlusseinrichtung 14 verschließbar ist. Die Verschlusseinrichtung 14 weist dabei eine Drehachse 26 auf, mittels welcher die Verschlusseinrichtung über Befestigungseinrichtungen 23 des Deckels 12 an diesem verschwenkbar gehalten ist. Zudem weist die Verschlusseinrichtung 14 ein Henkelelement 15 auf, mittels welcher der Trinkbehälter 1 beispielsweise an einem Haken aufgehängt werden kann.

An dem dem Deckel 12 gegenüberliegenden Ende des Trinkbehälters 1 weist das Behältergehäuse 4 eine Unterseite 9 auf. Mit dieser Unterseite, die planar ausgebildet ist, kann der Trinkbehälter 1 auf einer ebenen Fläche, wie beispielsweise einem Tisch oder einer Theke abgestellt werden. Zudem weist die Unterseite 9 ein als Innengewinde 11 ausgebildetes Gewinde 10 auf, sodass über ein korrespondierendes Gewinde, insbesondere ein entsprechendes Außengewinde ein weiteres Behältnis an dem Trinkbehälter 1 anordenbar ist. In einem derartigen Behältnis können gegebenenfalls Wertgegenstände, Geld, Schlüssel oder dergleichen mehr aufbewahrt werden.

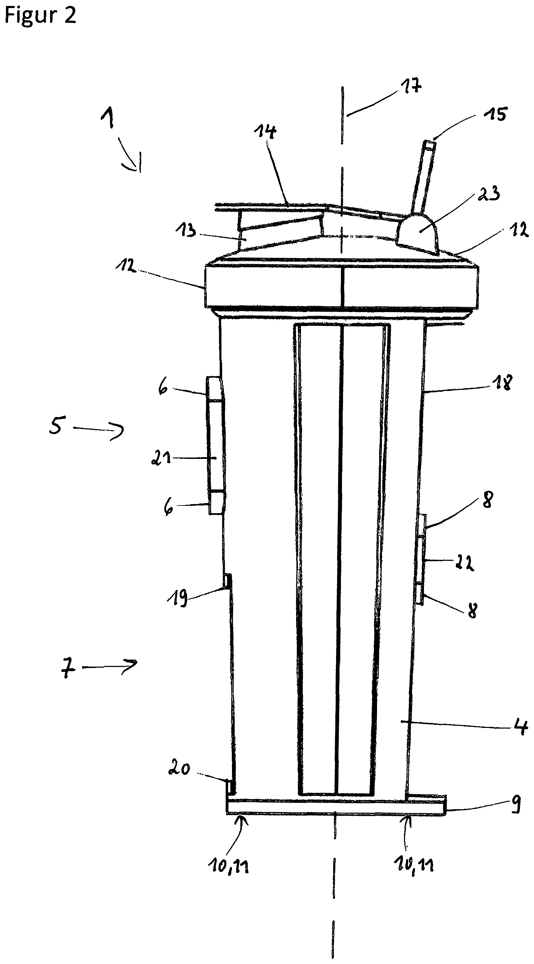

Wie insbesondere auch der Figur 2, welche eine erste Seitenansicht des Trinkbehälters der Figur 1 zeigt, dargestellt ist, weist das Behältergehäuse 4 eine im Wesentlichen um seine Mittellängsachse 17 rotationssymmetrische Grundform auf, welche allerdings an einer, in der Figur 2 in der rechten Bildhälfte dargestellten Seite abgeflacht ist, sodass das Behältergehäuse 4 im Wesentlichen aus einem Behälterboden und einem Behälterrand beziehungsweise Behältermantel gebildet ist. Durch die Abflachung entsteht eine planare Fläche 18 am Behältermantel. An dieser planaren Fläche 18, welche sich im Wesentlichen über die gesamte Längserstreckung des Behältergehäuses 4 erstreckt, ist mittig ein Halteelement 22 des Behältergehäuses 4 angeordnet, welches mit dem Behältergehäuse 4 einteilig ausgebildet ist, in dem in diesem Ausführungsbeispiel zwei Magneten 8 unverlierbar angeordnet sind. Mittels dieser Magneten 8 können an dem Trinkbehälter 1 beziehungsweise dessen Gehäusebehälter 4 ferromagnetische Elemente befestigt werden. Dies können unter anderem auch elektronische Geräte, wie beispielsweise Smartphones oder Tablet Computer sein, die auf ihrer Rückseite eine ferromagnetische Abdeckung aufweisen oder auf deren Rückseite ein ferromagnetisches Element angebracht wurde. Natürlich ist es auch denkbar, dass derartige Smartphones oder Tablet Computer in einer Hülle eingebracht sind, und in dieser Hülle gegenüber dem Display auf der Rückseite liegend eine ferromagnetische Platte eingebracht wurde, sodass diese Hülle mit samt dem elektronischen Gerät an dem Trinkbehälter 1 beziehungsweise dessen Behältergehäuses 4 befestigbar sind. Natürlich können auch andere ferromagnetische Gegenstände wie beispielsweise Schlüssel oder dergleichen an diesen Magneten befestigt werden.

Wie bereits erwähnt, erstreckt sich die planare Fläche 18 im Wesentlichen von der Unterseite 9 bis zum Deckel 12 beziehungsweise der Öffnung 3 des Behältergehäuses 4. Somit sind entsprechende elektronische Geräte wie Smartphones oder Tablet Computer derart an dem Trinkbehälter 1 befestigbar, dass sie zwischen der Unterseite 9 und dem Deckel 12 daran anordenbar sind, ohne dass sie störend über den Trinkbehälter 1 beziehungsweise dessen Behältergehäuse 4 hinausragen. Somit ist die Wahrscheinlichkeit, dass ein ungewolltes Lösen eines an dem Magneten des Halteelements 22 angeordneten Elementes, insbesondere eines Smartphones oder eines Tablet Computers, wirkungsvoll minimiert ist.

An dem der Fläche 18 gegenüberliegenden Bereich des Behältergehäuses 4 des Trinkbehälters 1 ist nunmehr eine Halteeinrichtung 5 angeordnet. Diese Haltevorrichtung 5 besteht in diesem Ausführungsbeispiel aus einem Halteelement 21, welches vorteilhafterweise einstückig mit dem Behältergehäuse 4 ausgebildet ist und in dem unverlierbar zwei Haltemagnete 6 angeordnet sind. Mittels dieser Haltemagnete ist es in einfacher Weise möglich, den gesamten Trinkbehälter 1 in einfacher Weise an einem ferromagnetischen Element, insbesondere einem ferromagnetischen Material eines Sport- oder Fitnessgerätes innerhalb eines Fitnessstudios anzuordnen.

Ferner ist auf der der Fläche18 gegenüberliegenden Seite des Behältergehäuses 4 auch noch eine Halterung für eine Chipkarte oder dergleichen angeordnet. Diese Halterung weist dabei zwei Laschenelemente 19 und 20 auf, zwischen welche die Chipkarte oder dergleichen einschiebbar, einlegbar oder einklemmbar ist, wie dies insbesondere der Seitenansicht der Figur 2 zu entnehmen ist.

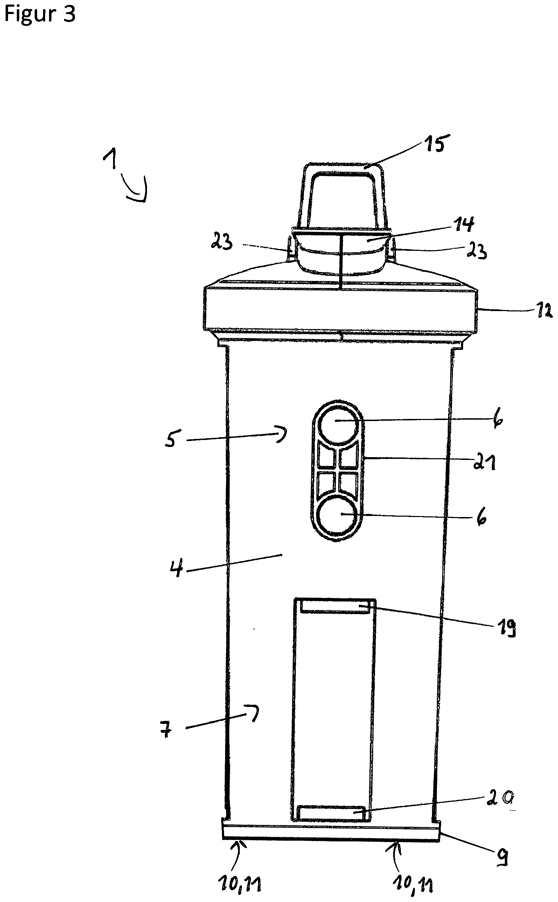

In der Figur 3 wird nunmehr eine weitere Seitenansicht des Trinkbehälters der der Figur 1 gezeigt. Hierbei ist in einer Frontalansicht insbesondere die Halteeinrichtung 5 samt dem Halteelement 21 und den darin unverlierbar angeordneten zwei Haltemagneten 6 erkennbar. Ferner ist auch hier die Halterung 7 für eine Chipkarte oder dergleichen in einer Frontalansicht gezeigt. Insbesondere sind hier auch die Haltelaschen 19 und 20 deutlich erkennbar, mit deren Hilfe eine Chipkarte oder dergleichen in die Halterung 7 einschiebbar, einlegbar oder einklemmbar ist.

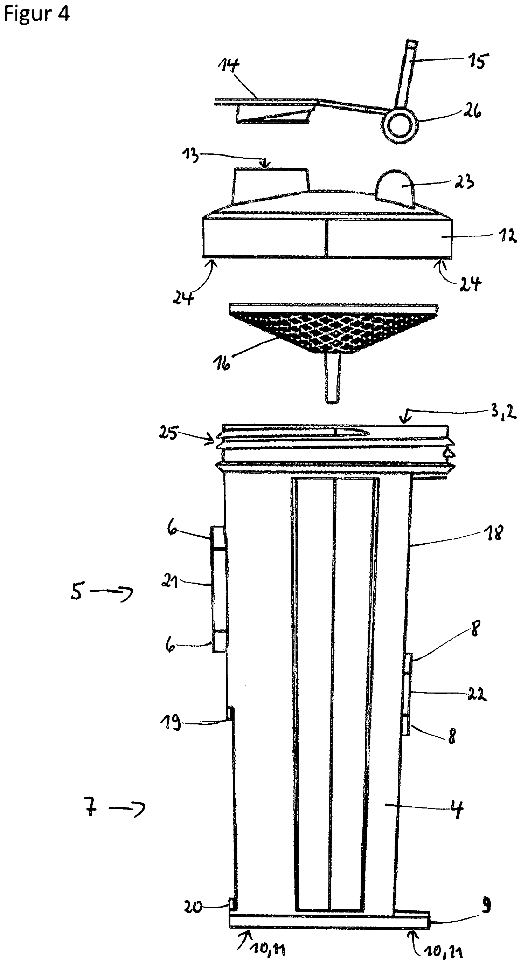

In der Figur 4 ist eine Explosionsdarstellung des Trinkbehälters 1 der Figur 1 gezeigt. Insbesondere wird hierbei sichtbar, dass innerhalb des Innenraums 2 ein Sieb 16 zwischen dem Behältergehäuse 4 und dem Deckel 12 anordenbar beziehungsweise angeordnet ist. Weiterhin ist in dieser Darstellung auch ein Außengewinde 25 im Bereich der Öffnung 3 des Behältergehäuses 4 deutlich zu erkennen. Dieses Außengewinde 25 korrespondiert mit einem entsprechenden Innengewinde 24 des Deckels 12, sodass der Innenraum 2 beziehungsweise die Öffnung 3 und damit das Behältergehäuse 4 beziehungsweise der Trinkbehälter 1 flüssigkeitsdicht verschließbar ist.

Ferner ist in der Darstellung gemäß Figur 4 auch die Trinköffnung 13 innerhalb des Deckels 12 erkennbar. Diese Trinköffnung 13 ist mittels der Verschlusseinrichtung 14 verschließbar. Die Verschlusseinrichtung ist dabei mittels einer Drehachse 26 in einer Befestigungseinrichtung 23 des Deckels 12 verschwenkbar anordenbar beziehungsweise angeordnet. Hierdurch ist es in einfacher weise möglich durch ein Verschwenken der Verschlusseinrichtung 14 die Trinköffnung 13 einfach, schnell und sicher flüssigkeitsdicht zu verschließen beziehungsweise zu öffnen.

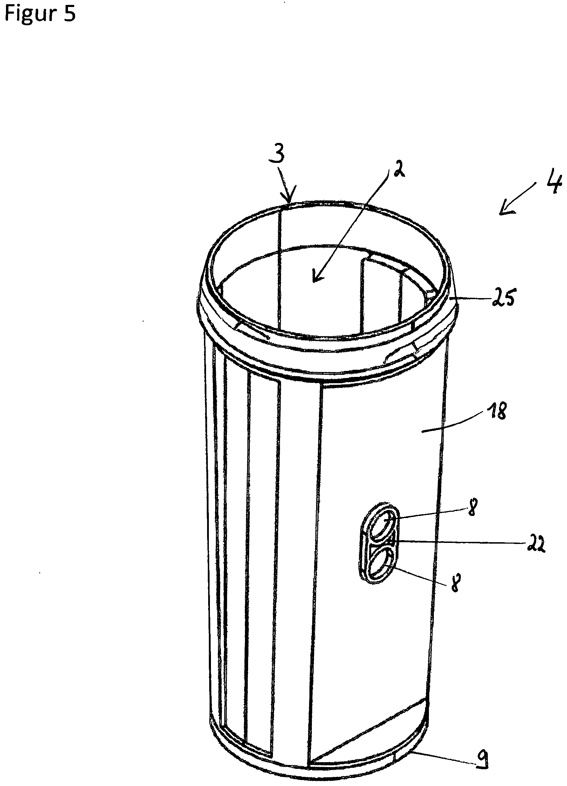

In der Figur 5 ist eine perspektivische Darstellung des Behältergehäuses 4 dargestellt. Hier ist insbesondere deutlich zu erkennen, dass das Behältergehäuse 4 gegenüberliegend der Unterseite 9 eine Öffnung 3 aufweist, über welche ein Getränk in den Innenraum 2 des Behältergehäuses 4 eingebracht werden kann.

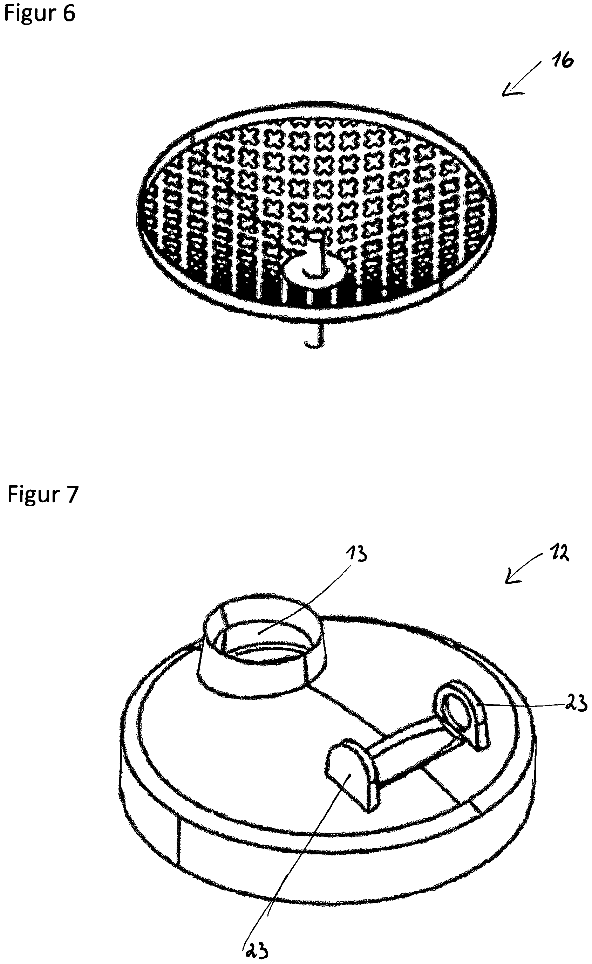

Figur 6 zeigt eine Detaildarstellung des Siebes 16. Insbesondere ist hierbei zu erkennen, dass in diesem Ausführungsbeispiel die Öffnungen innerhalb des Siebes 16 in Form eines Pluszeichens ausgebildet sind. Das Sieb 16 dient dazu, dass feste Bestandteile eines in das Behältergehäuse 4 eingebrachte Getränk beim Trinken zurückgehalten werden und nicht über die Trinköffnung 13 innerhalb des Deckels 12 in den Mund des Benutzers gelangen.

In Figur 7 ist der Deckel 12 ebenfalls noch mal separat in einer perspektivischen Darstellung gezeigt. Insbesondere sind hierbei die Trinköffnung 13 sowie die Befestigungseinrichtung 23 deutlich zu erkennen. Innerhalb der Befestigungseinrichtung 23 ist die Verschlusseinrichtung 14 mit ihrer Drehachse 26 einbringbar, sodass diese Verschlusseinrichtung 14 an der Befestigungseinrichtung 23 verschwenkbar gehalten ist und somit ein sicheres, schnelles und insbesondere einfaches Öffnen und Verschließen der Trinköffnung 13 und Deckel 12 möglich ist.

### Bezugszeichenliste

- 1: Trinkbehälter
- 2: Innenraum
- 3: Öffnung
- 4: Behältergehäuse
- 5: Halteeinrichtung
- 6: Haltemagnet
- 7: Halterung
- 8: Magnet
- 9: Unterseite
- 10: Gewinde
- 11: Innengewinde
- 12: Deckel
- 13: Trinköffnung
- 14: Verschlusseinrichtung
- 15: Henkelelement
- 16: Sieb
- 17: Mittellängsachse
- 18: Fläche
- 19: Laschenelement
- 20: Laschenelement
- 21: Halteelement
- 22: Halteelement
- 23: Befestigungseinrichtung
- 24: Innengewinde
- 25: Außengewinde
- 26: Drehachse

## Patentansprüche

1. Trinkbehälter (1) mit einen Innenraum (2) und eine Öffnung (3) aufweisenden Behältergehäuse (4) und einer Halteeinrichtung (5), wobei die Halteinrichtung (5) wenigstens einen an dem Behältergehäuse (4) angeordneten Haltemagneten (6) aufweist, wobei der Haltemagnet (6) zur Anordnung des Trinkbehälter (1) an ferromagnetischen Materialien eines Sport- oder Fitnessgerätes ausgebildet ist und dass in Bezug auf eine Mittellängsachse (17) des Behältergehäuses (4) gegenüberliegend dem wenigstens einen Haltemagneten (6) an oder in dem Behältergehäuse (4) wenigstens ein weiterer Magnet (8) angeordnet ist, **dadurch gekennzeichnet, dass** das Behältergehäuse (4) eine im Wesentlichen rotationssymmetrische Grundform bezüglich seiner Mittellängsachse (17) aufweist, wobei im Bereich des wenigstens einen weiteren Magneten (8) das Behältergehäuse (4) eine planare Fläche (18) aufweist, welche sich im Wesentlichen über die gesamte Längserstreckung des Behältergehäuses (4) erstreckt.

2. Trinkbehälter nach Anspruch 1, **dadurch gekennzeichnet, dass** an dem Behältergehäuse (4) eine Halterung (7) für eine Chipkarte oder dergleichen angeordnet ist.

3. Trinkbehälter nach einem der vorhergehenden Ansprüche, **dadurch gekennzeichnet, dass** das Behältergehäuse (4) eine der Öffnung (3) gegenüberliegenden Unterseite (9) aufweist, die mit einem Gewinde (10), vorzugsweise einem Innengewinde (11) versehen ist.

4. Trinkbehälter nach einem der vorhergehenden Ansprüche, **dadurch gekennzeichnet, dass** die Öffnung (3) des Behältergehäuses (4) mittels eines lösbar an dem Behältergehäuse (4) anordenbaren Deckel (12) verschließbar, vorzugsweise flüssigkeitsdicht verschließbar ist.

5. Trinkbehälter nach Anspruch 4, **dadurch gekennzeichnet, dass** der Deckel (12) eine Trinköffnung (13) aufweist, welche vorzugsweise mittels einer Verschlusseinrichtung (14), die lösbar oder unverlierbar an dem Deckel (12) angeordnet ist, verschleißbar, vorzugsweise flüssigkeitsdicht verschließbar ist, wobei die Verschlusseinrichtung (14) vorzugsweise ein Henkelelement (15) aufweist.

6. Trinkbehälter nach Anspruch 4 oder 5, **dadurch gekennzeichnet, dass** in dem Innenraum (2) des Behältergehäuses (4) ein Sieb (16) anordenbar ist, welches vorzugsweise an dem Deckel (12) lösbar anordenbar ist und besonders bevorzugt durch den Deckel (12) und die Öffnung (3) des Behältergehäuses (4) fixierbar ist, wenn das Behältergehäuse (4) mittels des Deckels verschlossen ist.

7. Trinkbehälter nach einem der vorhergehenden Ansprüche, **dadurch gekennzeichnet, dass** die Halterung (7) für eine Chipkarte in Form eines Einsteck- oder Einschiebfachs beziehungsweise in Form einer Einklemmeinrichtung ausgebildet ist und dazu vorzugsweise zwei Laschenelemente (19, 20) aufweist.

## Claims

1. Drinks container (1) having a container housing (4) that has an interior (2) and an opening (3), and having a holding device (5), wherein the holding device (5) has at least one holding magnet (6) arranged on the container housing (4), wherein the holding magnet (6) is configured for the drinks container (1) to be arranged on ferromagnetic materials of a piece of sports or fitness equipment and wherein at least one further magnet (8) is arranged on or in the container housing (4) on the opposite side from the at least one holding magnet (6) with respect to a longitudinal centre axis (17) of the container housing (4), **characterized in that** the container housing (4) has a substantially rotationally symmetric basic shape with respect to its longitudinal centre axis (17), wherein, in the region of the at least one further magnet (8), the container housing (4) has a planar face (18) that extends substantially along the entire longitudinal extent of the container housing (4).

2. Drinks container according to Claim 1, **characterized in that** a holder (7) for a chip card or the like is arranged on the container housing (4).

3. Drinks container according to either of the preceding claims, **characterized in that** the container housing (4) has an underside (9) on the opposite side from the opening (3), said underside (9) being provided with a thread (10), preferably an internal thread (11).

4. Drinks container according to one of the preceding claims, **characterized in that** the opening (3) of the container housing (4) is closable, preferably closable in a liquid-tight manner, by means of a lid (12) that is detachably arrangeable on the container housing (4).

5. Drinks container according to Claim 4, **characterized in that** the lid (12) has a drinking opening (13), which is closable, preferably closable in a liquid-tight manner, preferably by means of a closure device (14) that is detachably or captively arranged on the lid (12), wherein the closure device (14) preferably has a handle element (15).

6. Drinks container according to Claim 4 or 5, **characterized in that** a strainer (16) is arrangeable in the interior (2) of the container housing (4), said strainer (16) preferably being detachably arrangeable on the lid (12) and particularly preferably being fixable by the lid (12) and the opening (3) of the container housing (4) when the container housing (4) has been closed by means of the lid.

7. Drinks container according to one of the preceding claims, **characterized in that** the holder (7) for a chip card is configured in the form of a plug-in or push-in receptacle or in the form of a clamping device, and to this end preferably has two tab elements (19, 20).

## Revendications

1. Récipient à boisson (1) comprenant un boîtier de récipient (4) présentant un espace intérieur (2) et une ouverture (3), et un dispositif de retenue (5), le dispositif de retenue (5) comprenant au moins un aimant de retenue (6) agencé sur le boîtier de récipient (4), l'aimant de retenue (6) étant configuré pour l'agencement du récipient à boisson (1) sur des matériaux ferromagnétiques d'un appareil de sport ou de fitness, et au moins un aimant supplémentaire (8) étant agencé sur ou dans le boîtier de récipient (4) à l'opposé de l'au moins un aimant de retenue (6) par rapport à un axe longitudinal médian (17) du boîtier de récipient (4), **caractérisé en ce que** le boîtier de récipient (4) présente une forme de base essentiellement symétrique par rotation par rapport à son axe longitudinal médian (17), le boîtier de récipient (4) présentant dans la zone de l'au moins un aimant supplémentaire (8) une surface planaire (18), qui s'étend essentiellement sur l'étendue longitudinale totale du boîtier de récipient (4).

2. Récipient à boisson selon la revendication 1, **caractérisé en ce qu'**un support (7) pour une carte à puce ou analogue est agencé sur le boîtier de récipient (4).

3. Récipient à boisson selon l'une quelconque des revendications précédentes, **caractérisé en ce que** le boîtier de récipient (4) présente un côté inférieur (9) opposé à l'ouverture (3), qui est muni d'un filetage (10), de préférence d'un filetage intérieur (11).

4. Récipient à boisson selon l'une quelconque des revendications précédentes, **caractérisé en ce que** l'ouverture (3) du boîtier de récipient (4) peut être fermée, de préférence peut être fermée de manière étanche aux liquides, au moyen d'un couvercle (12) pouvant être agencé de manière amovible sur le boîtier de récipient (4).

5. Récipient à boisson selon la revendication 4, **caractérisé en ce que** le couvercle (12) présente une ouverture à boisson (13), qui peut être fermée, de préférence qui peut être fermée de manière étanche aux liquides, de préférence au moyen d'un dispositif de fermeture (14), qui est agencé de manière amovible ou imperdable sur le couvercle (12), le dispositif de fermeture (14) présentant de préférence un élément anse (15).

6. Récipient à boisson selon la revendication 4 ou 5, **caractérisé en ce qu'**un tamis (16) peut être agencé dans l'espace intérieur (2) du boîtier de récipient (4), qui peut de préférence être agencé de manière amovible sur le couvercle (12) et qui peut de manière particulièrement préférée être fixé à travers le couvercle (12) et l'ouverture (3) du boîtier de récipient (4) lorsque le boîtier de récipient (4) est fermé au moyen du couvercle.

7. Récipient à boisson selon l'une quelconque des revendications précédentes, **caractérisé en ce que** le support (7) pour une carte à puce est configuré sous la forme d'un compartiment d'enfichage ou d'insertion ou sous la forme d'un dispositif de serrage, et comprend pour cela de préférence deux éléments brides (19, 20).
